# EUROPEAN PATENT SPECIFICATION

(11) **EP 0 542 194 B1**
(45) Date of publication and mention of the grant of the patent: **07.05.1997**
(21) Application number: 92119202.7
(22) Date of filing: 10.11.1992
(51) Int. Cl.: B23D 45/02, B23D 45/04, B23D 59/02, B24B 27/06

(54) **Cutting machine, particularly for cutting profiled elements**
Schneidmaschine insbesondere zum Schneiden von Profilelementen
Machine de coupe en particulier pour couper des éléments profilés

(30) Priority: 12.11.1991 IT PD910209; 19.02.1992 IT MO920024
(43) Date of publication of application: 19.05.1993
(73) Proprietor: EMMEGI S.r.l., I-41019 Limidi di Soliera (Modena) (IT)
(72) Inventor: Caiumi, Giuseppe, I-41012 Carpi (Modena) (IT)
(74) Representative: Modiano, Guido, Dr.-Ing.

(56) References cited:
- EP-A- 0 348 536
- DE-U- 8 631 960
- US-A- 3 289 662
- SOVIET ENGINEERING RESEARCH vol. 11, no. 4, 1991, NEW YORK, US pages 118 - 119, XP247809 V. DOTSENKO "Installation for blank cutting"

## Description

The present invention relates to an omnidirectional cropping machine, particularly for cutting profiled elements according to the precharacterising portion of claim 1.

Machines equipped with a circular cutting blade arranged, together with the various components for its operation, in a base or on a machining head lying above the base of the machine, have been in use for a long time for the multi-directional cutting of profiled elements.

In a first case, the blade moves upwards in order to work, whereas the reverse occurs in a second case.

Known machines have shown problems in machining parts of very short length; in fact, due to the unavoidable bulk of known machines, if two mutually coupled machining units are used, as normally occurs in any case, to machine the front and rear ends of a segment of a profiled element, the machining surfaces on which said profiled element can be rested cannot be moved mutually closer more than allowed by said bulks.

A machine having the problems set forth above, is known from the document: SOVIET ENGINEERING AND RESEARCH, Vol 11, no 4, 1991, New York, US, pages 118-119 (V. DOTSENKO - "Installation for blank cutting")

Furthermore, known machines, especially if provided with a box-like casing in which the motors are enclosed, suffer from motor overheating problems, and there is no possibility of reducing this problem.

The aim of the present invention is to solve the problems described above by providing an omnidirectional cropping machine, particularly for cutting profiled elements, provided with a machining head which, paired with a similar one, allows to machine, over minimal distances, the parts to be cut.

Within the scope of this aim, an object of the invention is to provide a machine which effectively avoids the overheating of the motors which actuate the cutting blades.

Another object of the invention is to provide a machine which is structurally simple and is highly reliable in operation.

This aim, these objects and others which will become apparent hereinafter are achieved by an omnidirectional cropping machine, according to the present invention and having the features set forth in Claim 1.

Further characteristics and advantages of the present invention will become apparent from the description of some preferred but not exclusive embodiments of the machine according to the invention, illustrated only by way of non-limitative example in the accompanying drawings, wherein:
figure 1 is a schematic partially sectional front view of the machine according to the invention, in a first embodiment;
figure 2 is a schematic partially sectional front view of the machine according to the invention, in a second embodiment;
figure 3 is a schematic front view, taken similarly to figures 1 and 2, of the machine according to the invention in a third embodiment;
figures 4 and 5 are views of a machine according to the invention equipped with two machining heads in two different operating conditions;
figures 6 and 7 are perspective views of two embodiments of the motor assembly for the actuation of the cutting blade.

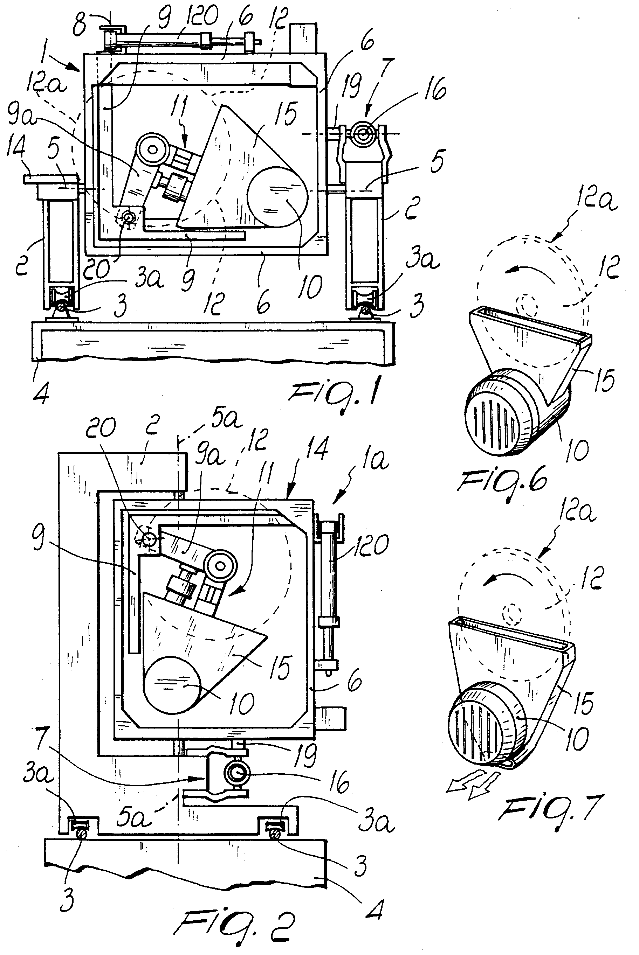

With particular reference to figure 1, the machine according to the invention comprises at least one machining head, generally designated by the reference numeral 1, which comprises a first box-like frame 2 which is slideably mounted, in one direction and in the opposite direction, by means of rollers 3a, on horizontal guides 3 which are mutually parallel and supported by a base 4. As an alternative to what is illustrated, the guides 3 could also be contained within the base 4.

A second frame 6 is articulated inside the first frame 2 about a first axis 5 which is arranged substantially at right angles to the extension of the guides 3; said second frame is preferably rectangular and in turn supports a third frame 9 inside it.

The third frame 9 is articulated to the second frame 6 about a second axis 8 which is preferably parallel to one of the sides of the second frame 6 and is perpendicular to the first axis 5.

The third frame 9 supports a cutting assembly comprising a motor assembly 10 which actuates, by means of known transmissions 11, a circular cutting blade 12 which can move, when actuated, together with the motor assembly 10, from an inactive position to a machining position in which it protrudes with a portion from the third frame 9 and from a slot 13 which is provided for this purpose in one of the sides of the second frame 6, so as to interfere with a part P to be cut arranged on a machining surface 14 which is fixed to the first frame 2 laterally to the second frame 6.

The third frame 9 is substantially L-shaped, and its two sides are arranged on a same plane; the cutting assembly is supported by the third frame by means of an arm 9a which is pivoted to the third frame with one of its ends in the region where the two sides of said third frame join. The arm 9a has a curved portion in an intermediate region, and the blade 12 is pivoted at said curved portion.

More particularly, in the first embodiment of the machine according to the invention, illustrated in figure 1, the first axis 5 is arranged horizontally and is at right angles to two of the sides of the second frame 6, and the second axis 8 is parallel to one of the sides of the third frame 9. To allow the passage of the blade 12 through the slot 13 defined in one of the sides of the second frame 6, the second axis 8 is parallel and proximate to the side of the second frame 6 in which said slot is defined and is arranged proximate to said side.

The machine according to the invention comprises first actuation means 7 to cause the oscillation of the second frame 6 with respect to the first frame 2 about the axis 5; said means are preferably constituted by a fluid activated cylinder 16 which has one end articulated at an end 17 of a vertical support 18 which extends from the first frame 2 and the other end in turn articulated to a pivot 19 which is fixed to the corresponding side of the second frame 6.

The oscillation of the third frame 9 about the axis 8 with respect to the second frame 6 can also be obtained by means of a further fluid activated cylinder 120 interposed between the second frame 6 and the third frame 9.

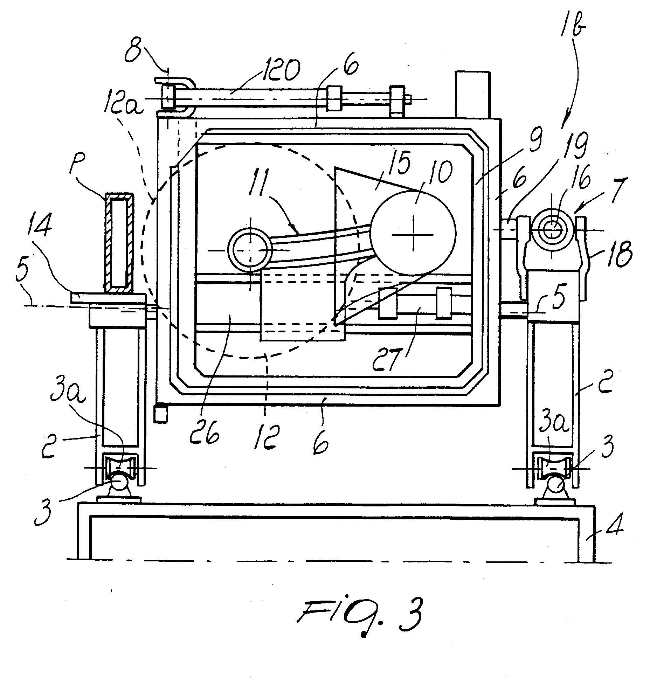

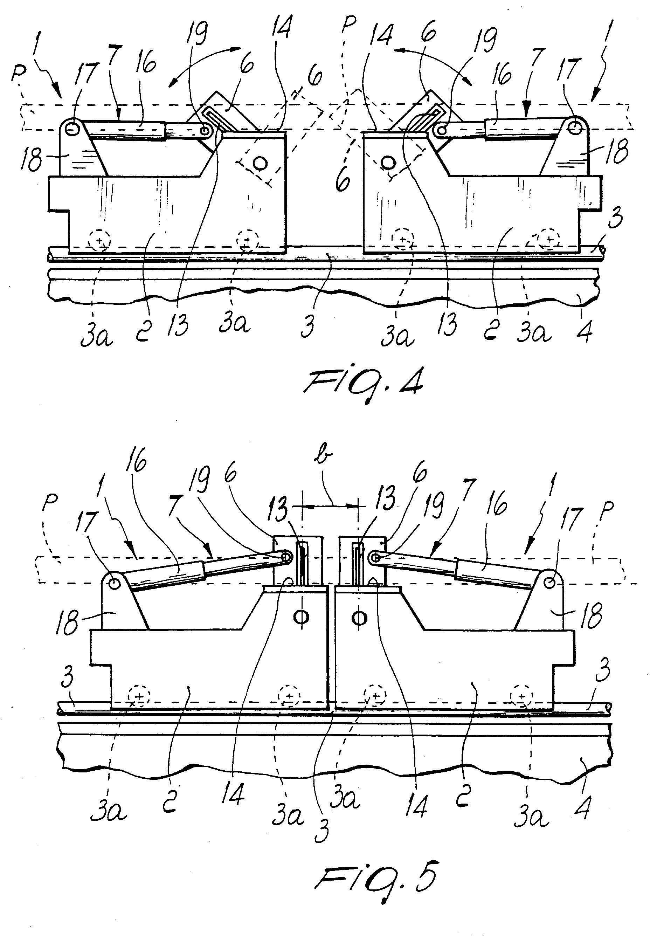

The blade 12 is partially contained within a box-like housing 15, except for a portion 12a which is meant to protrude from the slot 13 when the blade is moved into the cutting position. The housing 15 has a flattened shape with a front cross-section which tapers toward the motor assembly 10. As shown in figures 6 and 7, the housing 15 can be connected directly to the lateral surface of the motor assembly 10 or can affect said lateral surface and protrude below said motor assembly.

As shown in figure 2, the machine according to the invention in the second embodiment, generally designated by the reference numeral 1a, has the second frame 6 articulated to the first frame 2 about a first axis 5a which is arranged vertically and is at right angles to the plane of arrangement of the guides 3. The same reference numerals used to designate the same elements shown in figure 1 have been used to designate the elements of the machining head shown in figure 2, except for the first axis, which has been designated by the reference numeral 5a.

Both in the first embodiment illustrated in figure 1 and in the second embodiment illustrated in figure 2, the transfer of the blade 12 from the inactive position to the cutting position is obtained by means of the oscillation of the entire cutting assembly about the axis 20, which is the axis about which the arm 9a is pivoted to the third frame 9. The axis 20 is at right angles to the plane of arrangement of the third frame 9, so that the oscillation of the blade in passing from the inactive position to the cutting position or vice versa, which can be obtained by virtue of known actuation means, for example a fluid activated cylinder, occurs on a plane which is parallel to the plane on which said third frame 9 is arranged. Furthermore, the axis 20 is located proximate to the corner of the third frame 9 which is in the immediate vicinity of the side of the second frame 6 in which the slot 13 is defined.

In the third embodiment of the machine according to the invention, shown in figure 3 and generally designated by the reference numeral 1b, the machining head is composed, similarly to what has already been described with reference to the previous embodiments, of a first frame 2 to which a second frame 6 is articulated about a first axis 5; said second frame, which is preferably rectangular, in turn oscillably supports a third frame 9 about a second axis 8; the cutting assembly is mounted on said third frame. The actuation means which cause the oscillation of the second frame 6 with respect to the first frame 2, as well as the actuation means which cause the oscillation of the third frame 9 with respect to the second frame 6, are similar to those already described with reference to the preceding embodiments and therefore will not be described again. The elements of the machining head shown in figure 3, which correspond to the elements shown in figures 1 and 2, have been designated by the same reference numerals.

Differently from the embodiments illustrated in figures 1 and 2, in the third embodiment the third frame 9 is substantially rectangular and the movement of the cutting assembly to transfer the blade 12 from the inactive position to the cutting position is achieved by means of a translatory motion of the cutting assembly along a guide 26 which is fixed to two opposite sides of the third frame 9. Said guide 26 is preferably arranged at right angles to the second axis 8, but it might also be parallel thereto. The movement of the cutting assembly along the guide 26 can be obtained for example by means of a fluid activated cylinder 27 which is fixed to the third frame 9 with one of its ends and acts on the cutting assembly with its other end.

In this third embodiment, too, the blade 12 rotates inside a box-like housing 15 which conveys the air toward the motor assembly 10 to cool it.

In all of the described embodiments, the fluid activated cylinders 120, 16 and 27 might be in any case replaced with other technically equivalent actuation means, such as for example screw-and-nut assemblies or other known actuation means.

Preferably, the machine according to the invention, as shown particularly in figures 4 and 5, comprises two machining heads, such as those described with reference to figures 1, 2 and 3, which are mounted on the guides 3 and are arranged symmetrically with respect to a plane which is transverse to said guides 3. Said machining heads can move, when actuated, toward or away from each other along the guides 3 from a minimum mutual distance, which depends on the minimum distance "b" between the respective axes 5 about which the second frames 6 are articulated to the first frames, to a maximum mutual distance, which depends on the length of the guides 3.

The operation of the machine according to the invention is as follows.

If the machine has two machining heads, as usually occurs, the profiled elements P to be cut are placed on the working surfaces 14 each time; the inclinations of the cutting blades 12, which must correspond to the inclination of the cuts to be made, are preset by imparting the necessary combined rotations both of the second frames 6 with respect to the first frames 2, by means of the intervention of the cylinders 16, and of the third frames 9 with respect to the second frames 6, with the intervention of the cylinders 120. The active portions 12a of the cutting blades 12 are thus already orientated when they protrude from the related slots 13, due to the movement of the related cutting assemblies within the third frame 9, by an amount which is sufficient to completely cut the profiled element arranged on the machining surface 14. The machining heads 1 are arranged, as mentioned, at a preset mutual distance so as to obtain, after cutting, a segment of the profiled element P having the required length.

The machine according to the invention is in any case capable of operating even with a single machining head. In this case, after cutting one end, the second frame 6 is rotated by an angle which is symmetrical with respect to a vertical plane which passes through the axis 5, and the profiled element P is made to slide on the working surface 14 until the section to be cut is positioned at the cutting blade 12.

In practice it has been observed that the cropping machine according to the invention fully achieves the intended aim, since it is capable of performing very precise omnidirectional cuts even on extremely short profiled element segments.

Furthermore, in the machine according to the invention, effective motor cooling is achieved by virtue of the housing which conveys air flow generated by the rotation of the cutting blade onto the motor which actuates said blade.

The machine thus conceived is susceptible to numerous modifications and variations, all of which are within the scope of the inventive concept as claimed.

In practice, the materials employed, as well as the dimensions, may be any according to the requirements and the state of the art.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Omnidirectional cropping machine, particularly for cutting profiled elements, comprising at least one machining head (1, 1a, 1b) composed of: a first box-like frame (2) supported by a base (4); a second frame (6) which is articulated to said first frame (2) about a first axis (5, 5a) for being oscillatable, when actuated, about said first axis (5, 5a) inside said first frame (2); a third frame (9) which is articulated along one edge to said second frame (6) about a second axis (8) which is at right angles to said first axis (5, 5a), said third frame (9) being able to oscillate, when actuated, about said second axis (8), a cutting assembly (10, 11, 12) being mounted on said third frame (9), said cutting assembly being provided with a rotating cutting blade (12) and being movable, when actuated, with respect to said third frame (9) to pass from an inactive position to a cutting position in which said cutting blade (12) interferes with a part to be cut (P) which is positioned on a machining surface (14) outside said second frame (6), **characterized in that** said first frame (2) is slideably mounted along mutually parallel horizontal guides (3), said first axis (5, 5a) being arranged at right angles to said guides (3) and being defined by opposite articulation points located on opposite perimetric sides of said second frame (6), said sides of the second frame (6) defining a substantially confined space therebetween, said cutter assembly (10, 11, 12) being accommodated in said confined space in said inactive position while, in said active position, the cutter assembly is movable so that a portion (12a) of said cutting blade (12) protrudes from said confined space for interfering with the part to be cut (P).

2. Machine according to claim 1, characterized in that said cutting assembly comprises a motor assembly (10) for actuating said cutting blade (12), a box-like housing (15) being arranged around said cutting blade (12), said housing being connected to said motor assembly (10) to convey onto said motor assembly (10) a flow of air generated by the rotation of said cutting blade (12), said cutting blade (12) protruding with one of its portions from said housing (15) and from a slot (13) which is defined in said second frame (6) and opens onto a machining surface (14) which is substantially horizontal and rigidly coupled to said first frame.

3. Machine according to claim 1, characterized in that it comprises two machining heads (1, 1a, 1b) which are mounted on said guides (3) and are arranged symmetrically with respect to a plane which is transverse to said guides (3), said machining heads (1, 1a, 1b) being movable, when actuated, toward or away from each other along said guides (3) from a minimum mutual distance, which depends on the minimum distance (b) between the respective axes (5, 5a) for the articulation of the second frames (6) to the first frames (2), to a maximum mutual distance, which is defined by the length of said guides (3).

4. Machine according to claim 1, characterized in that said second frame (6) is substantially rectangular with two sides arranged substantially at right angles to said first axis (5, 5a) and in that said second axis (8) for the articulation of the third frame (9) to the second frame (6) is substantially parallel and proximate to the side of said second frame (6) in which said slot (13) is defined.

5. Machine according to one or more of the preceding claims, characterized in that it comprises first means for actuating the oscillation of said second frame (6) with respect to said first frame (2) about said first axis (5, 5a), said first actuation means comprising at least one first fluid activated cylinder (16) which is articulated with one of its ends to a support (18) which is rigidly coupled to said first frame (2) and with its other end articulated to a pivot (19) which is connected to the corresponding side of said second frame (6).

6. Machine according to one or more of the preceding claims, characterized in that it comprises second means for actuating the oscillation of said third frame (9) about said second axis (8) with respect to said second frame (6), said second actuation means being constituted by a further fluid activated cylinder (120) which is mounted on a side of said second frame (6) which is at right angles to said second axis (8) and acts on said third frame (9) with one of its ends.

7. Machine according to one or more of the preceding claims, characterized in that said first axis (5) is arranged horizontally.

8. Machine according to one or more of the preceding claims 1-6, characterized in that said first axis (5a) is arranged vertically.

9. Machine according to one or more of the preceding claims, characterized in that said cutting assembly is mounted on an arm (9a) which is arranged inside said third frame (9) and is articulated thereto about a third axis (20) which is substantially at right angles to the plane of arrangement of said third frame (9), said arm (9a) having a curved region at an intermediate portion, the cutting blade (12) being pivoted at said curved region, third actuation means being provided which act on said arm (9a) for the oscillation of said cutting assembly about said third axis (20) for the transfer of the blade (12) from the inactive position to the cutting position or vice versa.

10. Machine according to one or more of the preceding claims, characterized in that said arm (9a) is pivoted to said third frame (9) in the region where two sides of said third frame (9) join, proximate to said second axis (8).

11. Machine according to one or more of the preceding claims 1-8, characterized in that said cutting assembly is slideably mounted on a sliding guide (26) which is rigidly coupled to said third frame (9) and arranged inside it, said sliding guide (26) extending along a direction which is substantially perpendicular to said second axis (8), third actuation means (27) being provided which act on said cutting assembly to move it along said sliding guide (26) for the transfer of the blade (12) from said inactive position to said cutting position or vice versa.

12. Machine according to one or more of the preceding claims, characterized in that said box-like housing (15) has a flattened shape with a front cross-section which tapers toward said motor assembly (10).

13. Machine according to one or more of the preceding claims, characterized in that the lower portion of said box-like housing (15) extends perimetrically with respect to said motor assembly (10).

14. Machine according to one or more of the preceding claims, characterized in that said third actuation means comprise a fluid activated cylinder (27) which is interposed between said cutting assembly and said third frame (9).

15. Machine according to one or more of the preceding claims, characterized in that said actuation means are constituted by screw-and-nut assemblies.

16. Machine according to one or more of the preceding claims, characterized in that said first frame (2) is mounted on said guides (3) with rollers (3a) interposed.

17. Machine, of the type set forth in claim 1, having a cutter assembly comprising : a motor assembly (10) for actuating a cutting blade (12), and a box-like housing (15) being arranged around said cutting blade (12), said cutter assembly being characterized in that said housing has a front cross section which tapers towards said motor assembly (10) to which the housing (15) is connected so as to convey onto said motor assembly (10) a flow of air generated by the rotation of said cutting blade (12).

## Patentansprüche

1. Allrichtungs-Schneidemaschine, insbesondere zum Schneiden von Profilelementen, mit mindestens einem Bearbeitungskopf (1, 1a, 1b) bestehend aus: einem ersten kastenartigen Rahmen (2) auf einer Basis (4); einem zweiten Rahmen (6), der an dem ersten Rahmen (2) an einer ersten Gelenkachse (5, 5a) gelenkig befestigt ist, so daß er bei Betätigung um die erste Gelenkachse (5, 5a) in dem ersten Rahmen (2) schwingen kann; einem dritten Rahmen (9), der längs einer Kante an dem zweiten Rahmen (6) an einer zweiten Gelenkachse (8) rechtwinklig zu der ersten Gelenkachse (5, 5a) befestigt ist, so daß er bei Betätigung um die zweite Gelenkachse (8) schwingen kann, einer an dem dritten Rahmen (9) befestigten Schneideanordnung (10, 11, 12), die ein rotierendes Schneidmesser (12) enthält und bei Betätigung gegenüber dem dritten Rahmen (9) von einer inaktiven Position in eine Schneideposition bewegbar ist, in der das Schneidmesser (12) auf ein zu schneidendes Teil (P) auf einer Bearbeitungsfläche (14) außerhalb des zweiten Rahmens (6) einwirkt, dadurch **gekennzeichnet**, daß der erste Rahmen (2) längs paralleler horizontaler Führungen (3) verschiebbar ist, daß die erste Gelenkachse (5, 5a) rechtwinklig zu den Führungen (3) liegt und durch einander gegenüberliegende Gelenkpunkte an einander gegenüberliegenden Umfangsseiten des zweiten Rahmens (6) definiert ist, die einen Raum zwischen sich einschließen, und daß die Schneideanordnung (10, 11, 12) in der inaktiven Position in diesem Raum angeordnet ist, während sie in der aktiven Position so bewegbar ist, daß ein Teil (12a) der Schneidklinge (12) aus diesem Raum zum Einwirken auf das zu schneidende Teil (P) hervorsteht.

2. Maschine nach Anspruch 1, dadurch **gekennzeichnet**, daß die Schneideanordnung eine Motoranordnung (10) zum Betätigen des Schneidmessers (12) enthält, daß ein kastenartiges Gehäuse (15) das Schneidmesser (12) umgibt und mit der Motoranordnung (10) verbunden ist, um einen durch Drehen des Schneidmessers (12) erzeugten Luftstrom auf sie zu leiten, und daß das Schneidmesser (12) teilweise aus dem Gehäuse (15) und aus einem Schlitz (13) in dem zweiten Rahmen (6) hervorsteht, der sich zu einer Bearbeitungsfläche (14) hin öffnet, die im wesentlichen horizontal und starr mit dem ersten Rahmen verbunden ist.

3. Maschine nach Anspruch 1, dadurch **gekennzeichnet**, daß sie zwei Bearbeitungsköpfe (1, 1a, 1b) hat, die auf den Führungen (3) befestigt sind und symmetrisch zu einer Ebene angeordnet sind, die quer zu den Führungen (3) liegt, und daß die Bearbeitungsköpfe (1, 1a, 1b) bei Betätigung aufeinander zu oder voneinander weg längs der Führungen (3) ausgehend von einem minimalen gegenseitigen Abstand, der von dem minimalen Abstand (b) zwischen den Gelenkachsen (5, 5a) der an den ersten Rahmen (2) bewegbaren zweiten Rahmen (6) abhängt, bis zu einem maximalen gegenseitigen Abstand, der durch die Länge der Führungen (3) definiert ist, bewegbar sind.

4. Maschine nach Anspruch 1, dadurch **gekennzeichnet**, daß der zweite Rahmen (6) rechteckförmig ist, wobei zwei Seiten rechtwinklig zu der ersten Gelenkachse (5, 5a) liegen, und daß die zweite Gelenkachse (8) zur Gelenkbewegung des dritten Rahmens (9) an dem zweiten Rahmen (6) weitgehend parallel und nahe der Seite des zweiten Rahmens (6) liegt, in der der Schlitz (13) ausgebildet ist.

5. Maschine nach einem oder mehreren der vorhergehenden Ansprüche, dadurch **gekennzeichnet**, daß sie erste Betätigungsmittel zur Schwingbewegung des zweiten Rahmens (6) gegenüber dem ersten Rahmen (2) um die erste Gelenkachse (5, 5a) enthält, und daß diese Betätigungsmittel mindestens einen ersten fluidbetätigten Zylinder (16) enthalten, der mit einem Ende an einer mit dem ersten Rahmen (2) starr verbundenen Halterung (18) und mit dem anderen Ende an einem Schwenkpunkt (19) an der entsprechenden Seite des zweiten Rahmens (6) gelenkig befestigt ist.

6. Maschine nach einem oder mehreren der vorhergehenden Ansprüche, dadurch **gekennzeichnet**, daß sie zweite Betätigungsmittel zur Schwingbewegung des dritten Rahmens (9) um die zweite Gelenkachse (8) gegenüber dem zweiten Rahmen (6) enthält, und daß diese Betätigungsmittel durch einen weiteren fluidbetätigten Zylinder (120) gebildet sind, der an einer rechtwinklig zu der zweiten Gelenkachse (8) liegenden Seite des zweiten Rahmens (6) befestigt ist und mit einem Ende auf den dritten Rahmen (9) einwirkt.

7. Maschine nach einem oder mehreren der vorhergehenden Ansprüche, dadurch **gekennzeichnet**, daß die erste Gelenkachse (5) horizontal angeordnet ist.

8. Maschine nach einem oder mehreren der Ansprüche 1 bis 6, dadurch **gekennzeichnet**, daß die erste Gelenkachse (5a) vertikal angeordnet ist.

9. Maschine nach einem oder mehreren der vorhergehenden Ansprüche, dadurch **gekennzeichnet**, daß die Schneideanordnung an einem Arm (9a) befestigt ist, der in dem dritten Rahmen (9) angeordnet und mit diesem an einer dritten Gelenkachse (20) verbunden ist, die weitgehend rechtwinklig zur Anordnungsebene des dritten Rahmens (9) liegt, daß der Arm (9a) einen gekrümmten mittleren Abschnitt hat, an dem das Schneidmesser (12) schwenkbar ist, daß dritte Betätigungsmittel auf den Arm (9a) zur Schwingbewegung der Schneideanordnung um die dritte Gelenkachse (20) einwirken und das Schneidmesser (12) von der inaktiven Position zur Schneideposition oder umgekehrt bewegen.

10. Maschine nach einem oder mehreren der vorhergehenden Ansprüche, dadurch **gekennzeichnet,** daß der Arm (9a) an dem dritten Rahmen (9) nahe der zweiten Gelenkachse (8) in dem Abschnitt schwenkbar ist, wo zwei Seiten des dritten Rahmens (9) verbunden sind.

11. Maschine nach einem oder mehreren der Ansprüche 1 bis 8, dadurch **gekennzeichnet**, daß die Schneideanordnung auf einer Gleitführung (26) verschiebbar ist, die mit dem dritten Rahmen (9) starr verbunden und in ihm angeordnet ist, daß die Gleitführung (26) in einer Richtung weitgehend rechtwinklig zu der zweiten Gelenkachse (8) liegt, und daß dritte Betätigungsmittel (27) auf die Schneideanordnung einwirken, um sie längs der Gleitführung (26) zu bewegen und das Schneidmesser (12) von der inaktiven Position in die Schneidposition oder umgekehrt bewegen.

12. Maschine nach einem oder mehreren der vorhergehenden Ansprüche, dadurch **gekennzeichnet**, daß das kastenartige Gehäuse (15) eine abgeflachte Form hat, deren Frontquerschnitt zur Motoranordnung (10) hin verjüngt ist.

13. Maschine nach einem oder mehreren der vorhergehenden Ansprüche, dadurch **gekennzeichnet**, daß der untere Teil des kastenartigen Gehäuses (15) die Motoranordnung (10) am Umfang umgibt.

14. Maschine nach einem oder mehreren der vorhergehenden Ansprüche, dadurch **gekennzeichnet**, daß die dritten Betätigungsmittel einen fluidbetätigten Zylinder (27) enthalten, der zwischen der Schneideanordnung und dem dritten Rahmen (9) angeordnet ist.

15. Maschine nach einem oder mehreren der vorhergehenden Ansprüche, dadurch **gekennzeichnet**, daß die Betätigungsmittel Schrauben-Mutter-Anordnungen sind.

16. Maschine nach einem oder mehreren der vorhergehenden Ansprüche, dadurch **gekennzeichnet**, daß der erste Rahmen (2) auf den Führungen (3) mit Zwischenrollen (3a) geführt ist.

17. Maschine nach Anspruch 1, mit einer Schneideanordnung, die eine Motoranordnung (10) zum Betätigen eines Schneidmessers (12) und ein kastenartiges Gehäuse (15) enthält, das das Schneidmesser (12) einschließt, dadurch **gekennzeichnet**, daß das Gehäuse einen Frontquerschnitt hat, der zur Motoranordnung (10) hin verjüngt ist, mit der das Gehäuse (15) verbunden ist, um einen durch die Drehung des Schneidmessers (12) erzeugten Luftstrom auf die Motoranordnung (10) zu leiten.

## Revendications

1. Machine d'éboutage omnidirectionnelle, particulièrement pour couper des éléments profilés, comprenant au moins une tête d'usinage (1,1a,1b) consistant en : un premier bâti en forme de boîtier (2) supporté par une base (4) ; un deuxième bâti (6) qui est articulé audit premier bâti (2) autour d'un premier axe (5,5a) pour être apte à osciller, quand il est actionné, autour dudit premier axe (5,5a) à l'intérieur dudit premier bâti (2) ; un troisième bâti (9) qui est articulé le long d'un bord sur ledit deuxième bâti (6) autour d'un deuxième axe (8) qui est à angle droit par rapport audit premier axe (5,5a), ledit troisième bâti (9) étant susceptible d'osciller, quand il est actionné, autour dudit deuxième axe (8), un ensemble de coupe (10,11,12) étant monté sur ledit troisième bâti (9), ledit ensemble de coupe étant muni d'une lame de coupe rotative (12) et étant déplaçable, quand il est actionné, par rapport audit troisième bâti (9) pour passer d'une position inactive vers une position de coupe dans laquelle ladite lame de coupe (12) interfère avec une pièce à découper (P), qui est positionnée sur une surface d'usinage (14) à l'extérieur dudit deuxième bâti (6),
caractérisée en ce que ledit premier bâti (2) est monté de façon coulissante le long de guides (3) horizontaux mutuellement parallèles, ledit premier axe (5,5a) étant agencé à angle droit par rapport auxdits guides (3) et étant défini par des points d'articulation opposés situés sur des côtés périphériques opposés dudit deuxième bâti (6), lesdits côtés du deuxième bâti (6) définissant un espace sensiblement confiné entre eux, ledit ensemble de coupe (10,11,12) étant logé dans ledit espace confiné dans ladite position inactive tandis que, dans ladite position active, l'ensemble de coupe est déplaçable de sorte qu'une partie (12a) de ladite lame du coupe (12) fait saillie dudit espace confiné pour interférer avec la pièce à découper (P).

2. Machine selon la revendication 1,
caractérisée en ce que ledit ensemble de coupe comprend un ensemble à moteur (10) pour actionner ladite lame de coupe (12), un carter (15) en forme de boîtier étant agencé autour de ladite lame de coupe (12), ledit carter étant relié audit ensemble à moteur (10) pour véhiculer sur ledit ensemble à moteur (10) un flux d'air engendré par la rotation de ladite lame de coupe (12), ladite lame de coupe (12) faisant saillie avec une de ses parties dudit carter (15) et d'une tante (13) qui est définie dans ledit deuxième bâti (6) et s'ouvre sur une surface d'usinage (14) qui est sensiblement horizontale et rigidement couplée audit premier bâti.

3. Machine selon la revendication 1,
caractérisée en ce qu'elle comprend deux têtes d'usinage (1,1a,1b) qui sont montées sur lesdits guides (3) et sont agencées symétriquement par rapport à un plan qui est transversal auxdits guides (3), lesdites têtes d'usinage (1,1a,1b) étant déplaçables, quand elles sont actionnées, vers ou au loin l'une de l'autre le long desdits guides (3) à partir d'une distance mutuelle minimale, qui dépend de la distance minimale (b) entre les axes respectifs (5,5a) pour l'articulation du deuxième bâti (6) sur le premier bâti (2), vers une distance mutuelle maximale, qui est définie par la longueur desdits guides (3).

4. Machine selon la revendication 1,
caractérisée en ce que ledit deuxième bâti (6) est sensiblement rectangulaire avec deux côtés agencés sensiblement à angle droit par rapport audit premier axe (5,5a), et en ce que ledit deuxième axe (8) pour l'articulation du troisième bâti (9) sur le deuxième bâti (6), est sensiblement parallèle et proche du côté dudit deuxième bâti (6) dans lequel ladite fente (13) est définie.

5. Machine selon l'une ou plusieurs des revendications précédentes,
caractérisée an ce qu'elle comprend des premiers moyens pour actionner l'oscillation dudit deuxième bâti (6) par rapport audit premier bâti (2) autour dudit premier axe (5,5a), lesdits premiers moyens d'actionnement comprenant au moins un premier vérin (16) actionné par fluide qui est articulé à l'une de ses extrémités, à un support (18) qui est rigidement couplé audit premier bâti (2) et, à son autre extrémité, articulé à un pivot (19) qui est relié au côté correspondant dudit deuxième bâti (6).

6. Machine selon l'une ou plusieurs des revendications précédentes,
caractérisée on ce qu'elle comprend des deuxièmes moyens pour actionner l'oscillation dudit troisième bâti (9) autour dudit deuxième axe (8) par rapport audit deuxième bâti (6), lesdits deuxièmes moyens d'actionnement étant constitués par un autre vérin (120) actionné par fluide qui est monté sur un côté dudit deuxième bâti (6) qui est à angle droit par rapport audit deuxième axe (8) et agit sur ledit troisième bâti (9) par l'une de ses extrémités.

7. Machine selon l'une ou plusieurs des revendications précédentes,
caractérisée en ce que ledit premier axe (5) est agencé horizontalement.

8. Machine selon l'une ou plusieurs des revendications précédentes 1-6,
caractérisée en ce que ledit premier axe (5a) est agencé verticalement.

9. Machine selon l'une ou plusieurs des revendications précédentes,
caractérisée en ce que ledit ensemble de coupe est monté sur un bras (9a) qui est agencé à l'intérieur dudit troisième bâti (9) et est articulé à celui-ci autour d'un troisième axe (20) qui est sensiblement à angle droit par rapport au plan d'agencement dudit troisième bâti (9), ledit bras (9a) présentant une région courbée en une partie intermédiaire, la lame de coupe (12) étant apte à pivoter à ladite région courbée, des troisièmes moyens d'actionnement étant prévus qui agissent sur ledit bras (9a) pour l'oscillation dudit ensemble de coupe autour dudit troisième axe (20) pour le transfert de la lame (12) de la position inactive vers la position de coupe ou réciproquement.

10. Machine selon l'une ou plusieurs dos revendications précédentes,
caractérisée en ce que ledit bras (9a) pivote sur ledit troisième bâti (9) dans la région où deux côtés dudit troisième bâti (9) se rejoignent à proximité dudit deuxième axe (8).

11. Machine selon l'une ou plusieurs des revendications précédentes 1-8,
caractérisée en ce que ledit ensemble de coupe est monté de façon coulissante sur une glissière (26) qui est rigidement couplée audit troisième bâti (9) et agencée dans celui-ci, ladite glissière (26) s'étendant le long d'une direction qui est sensiblement perpendiculaire audit deuxième axe (8), des troisièmes moyens d'actionnement (27) étant prévus qui agissent sur ledit ensemble de coupe pour le déplacer le long de ladite glissière (26) pour le transfert de la lame (12) de ladite position inactive vers ladite position de coupe ou réciproquement.

12. Machine selon l'une ou plusieurs des revendications précédentes,
caractérisée en ce que ledit carter en forme de boîtier (15) présente une forme aplatie ayant une section transversale frontale qui s'amincit vers ledit ensemble à moteur (10).

13. Machine selon l'une ou plusieurs des revendications précédentes,
caractérisée on ce que la partie inférieure dudit carter en forme de boîtier (15) s'étend périphériquement par rapport audit ensemble à moteur (10).

14. Machine selon l'une ou plusieurs dos revendications précédentes,
caractérisée en ce que lesdits troisièmes moyens d'actionnement comprennent un vérin (27) actionné par fluide qui est disposé entre ledit ensemble de coupe et ledit troisième bâti (9).

15. Machine selon l'une ou plusieurs des revendications précédentes,
caractérisée en ce que lesdits moyens d'actionnement sont constitués par des ensembles vis-écrou.

16. Machine selon l'une ou plusieurs des revendications précédentes,
caractérisée en ce que ledit premier bâti (2) est monté sur des guides (3) avec des rouleaux (3a) interposés.

17. Machine du type décrit dons la revendication 1, à ensemble de coupe comprenant : un ensemble à moteur (10) pour actionner une lame de coupe (12), et un carter en forme de boîtier (15) étant agencé autour de ladite lame de coupe (12), ledit ensemble de coupe étant caractérisé en ce que ledit carter présente une section transversale frontale qui s'amincit vers ledit ensemble à moteur (10) auquel le carter (15) est relié, de façon à véhiculer sur ledit ensemble à moteur (10), un flux d'air engendré par la rotation de ladite lame de coupe (12).
